Europäisches Patentamt

European Patent Office

Office européen des brevets

(19)

(11) Veröffentlichungsnummer: **0 204 055 B1**

(12) # EUROPÄISCHE PATENTSCHRIFT

(45) Veröffentlichungstag der Patentschrift: **02.01.92**

(51) Int. Cl.5: **C22C 1/03**, C22C 22/00, C01B 3/00, C22C 1/02

(21) Anmeldenummer: **85730105.5**

(22) Anmeldetag: **07.08.85**

(54) Verfahren zur Herstellung einer Wasserstoffspeicherlegierung.

(30) Priorität: **05.06.85 EP 85730075**

(43) Veröffentlichungstag der Anmeldung:
**10.12.86 Patentblatt  86/50**

(45) Bekanntmachung des Hinweises auf die Patenterteilung:
**02.01.92 Patentblatt  92/01**

(84) Benannte Vertragsstaaten:
**DE FR GB IT**

(56) Entgegenhaltungen:
DE-A- 3 023 770
US-A- 4 079 523

(73) Patentinhaber: **MANNESMANN Aktiengesellschaft**
**Mannesmannufer 2**
**W-4000 Düsseldorf 1(DE)**

(72) Erfinder: **Bardenheuer, Friedrich, Dr.-Ing.**
**Dahlerdyk 104**
**W-4150 Krefeld 1(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

EP 0 204 055 B1

# EP 0 204 055 B1

**Beschreibung**

Die Erfindung betrifft ein Verfahren zur Herstellung einer Wasserstoffspeicherlegierung gemäß dem Gattungsbegriff des Patentanspruchs 1.

Derartige Wasserstoffspeicherlegierungen sind intermetallische Phasen, d.h. chemische Verbindungen der Komponenten mit stöchiometrischem Verhältnis der Komponenten, die der Formel $AB_2$ genügen. A ist dabei ein Element vom Anfang der Übergangsmetallreihe, während B ein oder mehrere Elemente aus der Reihe der übrigen Übergangsmetalle darstellt. Für A und B muß darüber hinaus gelten, daß das Atomradienverhältnis $r_A/r_B$ zwischen 1,05 und 1,68 liegt. Solche Verbindungen kristallisieren in der sogenannten C14-Struktur, die sich durch eine besonders dichte Atompackung auszeichnet. Die C14-Struktur wird ebenso wie die C15- und die C36-Struktur als Lavesphasen-Struktur bezeichnet. Die Elementarzelle der C14-Struktur ist hexagonal und enthält vier A-Atome und acht B-Atome. Das spezifische Gewicht dieser metallischen, sehr spröden Verbindungen liegt bei etwa 6 g/cm$^3$.

Aus der Literatur sind zahlreiche Beispiele für derartige Legierungen bekannt geworden. Sie können neben Titan und Mangan insbesondere auch Zirkon, Chrom, Vanadium, Eisen, Kobalt, Nickel, Kupfer und Aluminium enthalten. Ihre Wasserstoffspeicherkapazität, die als auf das Gewicht des Speichermaterials bezogene Gewichtsdifferenz der Wasserstoffaufnahme bei Raumtemperatur und 50 bar Wasserstoffdruck und dem Wasserstoffgehalt bei 60 °C und 1 bar Wasserstoffdruck definiert ist, liegt bei mehr als 2 Gewichtsprozent. Die DE-OS 30 23 77 offenbart neben Beispielen für derartige Wasserstoffspeicherlegierungen auch ein Verfahren zur schmelzmetallurgischen Herstellung dieser Legierungen. Dabei werden die pulverförmigen Komponenten einer solchen Legierung nach ihrer groben Mischung in dem wassergekühlten Kupfertiegel eines Lichtbogenofens im Vakuum oder unter Schutzgas kurzzeitig aufgeschmolzen. Anschließend wird die erstarrte Legierung zerkleinert und zur weiteren Homogenisierung erneut im Vakuum oder unter Schutzgas aufgeschmolzen. Diese Vorgänge werden ggf. mehrfach wiederholt.

Zur weiteren Verbesserung der Homogenisierung wird darüber hinaus eine mehrtägige Glühung der Wasserstoffspeicherlegierung bei 1000 °C im Vakuum oder unter Schutzgas vorgeschlagen.

Nachteilig bei dieser Vorgehensweise ist, daß in der Wasserstoffspeicherlegierung in der Regel nicht unerhebliche Anteile an Sauerstoff und Oxiden verbleiben, die die Speicherkapazität deutlich vermindern. Außerdem ist die Herstellung der Legierung durch das wiederholte Aufschmelzen, Abkühlen und Zerkleinern sowie die ggf. anschließende Wärmebehandlung sehr arbeits- und energieaufwendig. Schließlich kommt es bei der Erschmelzung häufig zu Reaktionen zwischen der Schmelze und dem Tiegelmaterial, weswegen zur Abhilfe auch tiegelfreie und deswegen aufwendige Schmelzverfahren vorgeschlagen werden.

Aus der US-A-40 79 523 ist ein Verfahren zur Herstellung einer Wasserstoffspeicherlegierung bekannt, die folgende Zusammensetzung aufweist (Gewichts-%):

```
42        -  52  % Ti
0,05      -  1,5 % Mischmetall
bis 10 %         Mn
bis 10 %         Ni
bis 0,1 %        O₂
Rest Eisen und übliche Verunreinigungen.
```

Die Herstellung dieser Legierung erfolgt in mehreren Schritten in einem Schmelzgefäß mit Ton-Graphit-Auskleidung vorzugsweise unter Schutzgas. Dabei wird zunächst eine Eisenschmelze (z.B. aus Armco-Eisen) bei ca. 1600 °C erzeugt, die dann mit der erforderlichen Titan-Menge in einem Schritt legiert und auf etwa 1425 °C gebracht wird. Danach wird diese Legierung durch Zusatz von Mischmetall unter Bildung einer oxidhaltigen Schlacke desoxidiert und schließlich abgegossen. Der Sauerstoffgehalt dieser desoxidierten Legierung kann immer noch bis zu 0,1 % betragen und beläuft sich in den offenbarten Ausführungsbeispielen auf 0,034 % bzw. 0,038 %. Um besonders hohe Wasserstoffspeicherkapazitäten zu ermöglichen, muß der Sauerstoffgehalt einer entsprechenden Speicherlegierung demgegenüber deutlich abgesenkt werden.

Aufgabe der Erfindung ist es daher, ein Verfahren anzugeben das die Herstellung von Wasserstoffspeicherlegierungen der im Patentanspruch 1 angegebenen Art mit möglichst hoher Speicherkapazität ermöglicht und die erwähnten Nachteile beseitigt.

2

EP 0 204 055 B1

Gelöst wird diese Aufgabe durch ein Verfahren mit den Merkmalen des Patentanspruchs 1. Vorteilhafte Weiterbildungen des Verfahrens sind in den Unteransprüchen 2 - 14 angegeben.

Die Erfindung geht zunächst davon aus, die Herstellung der Wasserstoffspeicherlegierung in einem Schmelzaggregat, z.B. einem Induktionsofen, vorzugsweise in einem einzigen Schmelzvorgang durchzuführen, wobei die Schmelze durch Vakuum oder Schutzgas von der äußeren Atmosphäre abgeschirmt ist. Es ist selbstverständlich auch möglich, einzelne Legierungsbestandteile in Form von Vorlegierungen bereits vorher miteinander zu verschmelzen. Um Reaktionen der Schmelze mit dem Tiegelmaterial auszuschließen, ist erfindungsgemäß vorgesehen, die Erschmelzung in einem Gefäß vorzunehmen, das mit einem Futter ` ausgekleidet ist, welches aus einem oder mehreren Oxiden eines bzw. mehrerer stark sauerstoffaffiner Metalle, wie insbesondere Calcium, Cer, Aluminium oder Zirkon, gebildet ist.

Hierdurch kann die Schmelze ohne Gefahr für das Gefäß und ohne große Energieverluste infolge einer Tiegelkühlung auch über längern Zeiten flüssig gehalten werden. Die Wahl des Futters verhindert insbesondere eine Reduktion der Gefäßauskleidung und damit eine ansonsten trotz Schutzgas oder Vakuum mögliche Sauerstoffzufuhr zur Schmelze.

Der zeitliche Verlauf des erfindungsgemäßen Verfahrens sieht vor, in einem ersten Schritt aus den konstituierenden Elementen der gewünschten Wasserstoffspeicherlegierung mit Ausnahme der vorgesehenen Anteile an Titan und/oder Zirkon sowie ggf. Cer eine Teillegierung zu erschmelzen. Es empfiehlt sich, diese Teillegierung zur Erzielung einer gleichmäßigen Vermischung der Komponenten und Abscheidung der ggf. mit den Einsatzstoffen eingebrachten Oxidbestandteile für eine Dauer, deren in Minuten angegebener Zahlenwert mindestens der in cm gemessenen Badspiegelhöhe der Schmelze entspricht, auf Temperatur zu halten. In einem zweiten Schritt wird diese Teillegierung durch Zugabe von Titan und/oder Zirkon und/oder Aluminium in einer Menge, die der mit Legierungselementen in die Schmelze eingebrachten Sauerstoffmenge entspricht, unter Abbindung der noch gelösten Sauerstoffanteile und Abscheidung der entstehenden Oxidpartikel desoxidiert. Hierin ist ein entscheidender Unterschied zu dem aus der US-A-407952 bekannten Verfahren gegeben, das die Zugabe von Titan in einem einzigen Schritt vorzieht. Die Zugabe des Desoxidationsmittels in der erfindungsgemaß beschränkten Menge anstelle einer Zugabe der auch für den angestrebten Legierungsgehalt ausreichenden Gesamtmenge an Titan und/oder Zirkon in einem Zug bewirkt, daß sich relativ große Oxidpartikel bilden, die schnell in die Schlacke aufsteigen und dadurch abgeschieden werden. Feine Oxidpartikel würden weitgehend in der Schmelze verbleiben. Bei Verwendung von Aluminium als Desoxidationsmittel ist es zweckmäßig, sofern Aluminium nicht selbst Legierungsbestandteil sein soll, die mengenmäßige Zugabe noch stärker zu beschränken, und nur den Hauptanteil an der Desoxidation mit Aluminium durchzuführen und für die restliche Desoxidation Titan und/oder Zirkon einzusetzen. Günstig ist es auch, den Desoxidationsschritt in mehreren Teilschritten durchzuführen, wobei im ersten Teilschritt mehr als die Hälfte (z. B. 80 %) der vorgesehenen Desoxidationsmittelmenge zugegeben wird.

Um eine ausreichende Abscheidung der Oxidpartikel zu ermöglichen, muß die Schmelze noch Zugabe des Desoxidationsmittels für eine gewisse Zeit auf Temperatur gehalten werden. Die erforderliche Haltezeit richtet sich nach Art, Form und Größe der Oxidpartikel sowie nach der Badspiegelhöhe der Schmelze (vgl. Knüppel: Desoxidation und Vakuumbehandlung von Stahlschmelzen, Düsseldorf 1970). Gute Ergebnisse werden erzielt, wenn diese Haltezeit in Minuten mindestens dem in cm gemessenen Zahlenwert der Badspiegelhöhe entspricht. Erst danach wird im dritten Schritt die restliche Menge an Titan und/oder Zirkon zugegeben. Es hat sich als vorteilhaft erwiesen, auch hiernach eine Haltezeit einzulegen, deren in Minuten angegebener Zahlenwert mindestens dem in cm gemessenen Zahlenwert der Badspiegelhöhe entspricht.

In besonders bevorzugter Ausführung der Erfindung wird die Restmenge an Titan und/oder Zirkon in mindestens zwei Teilmengen zugegeben, wobei nach jeder Teilmenge eine Haltezeit angeschlossen wird, deren in Minuten angegebene Dauer mindestens dem Zahlenwert der in cm gemessenen Badspiegelhöhe entspricht. Die Homogenisierung und weitere Desoxidierung der Schmelze wird dadurch gefördert.

Sofern als Legierungselement vorgesehen, wird erst nach der Desoxidation Cer (in der Regel als Cer-Mischmetall), vorzugsweise als letztes Element, d. h. nach der Zugabe der Restmenge an Titan und/oder Zirkon in die Schmelze gegeben, um auch ggf. noch vorhandene geringe Sauerstoffgehalte zu binden. Eine vorzeitige Zugabe von Cer würde dazu führen, daß der in der Schmelze befindliche Sauerstoff sich vorzugsweise mit dem Cer als dem sauerstoffaffinsten Schmelzenbestandteil verbinden würde. Bereits gebildete Titan- und/oder Zirkon-Oxide könnten sogar wieder reduziert werden. Das Cer-Oxid hat aber gegenüber dem Titan- bzw. Zirkon-Oxid den Nachteil, daß es aufgrund seines höheren spezifischen Gewichtes (ca. 7 g/cm$^3$) leicht in Suspension und damit als störendes Oxid weitgehend in der Wasserstoffspeichermasse bleiben würde. Da das aus der US-A-4079523 bekannte Verfahren die eigentliche Desoxidation mit Cer durchführt, ist in diesem Merkmal ein weiterer entscheidender Unterschied zum bekannten Stand der Technik zusehen.

3

Die erfindungsgemäß erschmolzene Wasserstoffspeicherlegierung wird zur Erzielung einer möglichst günstigen Kristallstruktur schließlich unter Beibehaltung der Abschirmung von der umgebenden Luft schroff abgekühlt, wobei vorzugsweise eine flüssigkeitsgekühlte Metallkokille verwendet wird, beispielsweise eine wassergekühlte Stahl- oder Kupferkokille. Als vorteilhaft hat sich erwiesen, Kokillen zu verwenden, deren in cm gemessene Innenoberflächen mindestens dem 40-Fachen, vorzugsweise dem 60-Fachen des in Kg angegebenen Zahlenwertes des Schmelzengewichtes entsprechen.

Im folgenden werden noch zwei Ausführungsbeispiele der Erfindung angegeben.

1. Beispiel:

Es sollte eine Wasserstoffspeicherlegierung hergestellt werden gemäß folgender Formel:

$$Ti_{1,0} \, V_{0,4} \, Fe_{0,07} \, Cr_{0,05} \, Mn_{1,5}$$

Unter Berücksichtigung der Atomgewichte und erwarteter Verdampfungsverluste an Mangan in Höhe von 7,5 % wurde für etwa 30 kg Schmelze folgende Einwaage vorgesehen:

| | |
|---|---|
| 8,86 kg | Ti |
| 3,74 kg | V |
| 0,71 kg | Fe |
| 0,48 kg | Cr |
| 16,27 kg | Mn |
| 0,40 kg | Ce-Mischmetall |

In einem Induktionsofen mit CaO-Auskleidung und 16 cm Gefäßdurchmesser wurden unter Schutzgas zunächst die Anteile an Fe, Cr, Mn und V bei 1400 °C eingeschmolzen. Diese Teillegierung wurde anschließend mit 60 g Titan desoxidiert. Nach einer Wartezeit von 20 min wurde die restliche Menge Titan zugegeben und nach weiteren 20 min das Ce-Mischmetall.

Schließlich wurde die Schmelze bei 1380 °C noch unter Schutzgas in eine wassergekühlte Stahlkokille abgegossen und dadurch schroff auf Raumtemperatur abgekühlt. Die erzeugte Wasserstoffspeicherlegierung hatte einen Sauerstoffgehalt von weniger als 0,001 Gew.-%.

2. Beispiel:

Es sollte eine Wasserstoffspeicherlegierung hergestellt bestehend aus Ti, Zr, Fe, Mn, V und Ce. Entsprechend dem ersten Beispiel wurden zunächst die Anteile an Mn, V und Ferro-Vanadin im gleichen Induktionsofen mit CaO-Futter bei 1400 °C unter Argon eingeschmolzen. Die Schmelze wurde 30 min lang bei dieser Temperatur gehalten und anschließend mit 0,2 Gew.-% Titan desoxidiert. Danach folgte wieder eine Haltezeit von 30 min. Anschließend wurde etwa die Hälfte des vorgesehenen Anteils an Titan zugegeben und die Schmelze 10 min lang auf Temperatur gehalten.

Dann wurde die restliche Menge Titan und das Zirkon zugegeben und für weitere 30 min auf Temperatur gehalten. Schließlich wurde das Cer-Mischmetall in die Schmelze gegeben, die danach bei etwa 1380 °C in eine wassergekühlte Kokille unter Argon abgestochen und abgekühlt wurde.

Der Sauerstoffgehalt der Legierung betrug wiederum weniger als 0,001 Gew.-%.

Die nutzbare Wasserstoffspeicherkapazität betrug im ungünstigsten Fall bei 0 °C, einem Beladungsdruck von 50 bar und Entladung gegen 1 - 2 bar 1,95 Gew.-% bezogen auf die Legierungseinwaage.

**Patentansprüche**

**1.** Verfahren zur Herstellung einer Wasserstoffspeicherlegierung auf der Basis der Lavesphasen $AB_2$, wobei A Titan und/oder Zirkon und B ein oder mehrere Elemente der übrigen Übergangsmetallreihe bedeuten und das Atomradienverhältnis $r_A/r_B$ zwischen 1,05 und 1,68 liegt, durch Erschmelzung im Vakuum oder unter Schutzgas, wobei die Erschmelzung, die vorzugsweise in einer Hitze erfolgt, in einem Gefäß durchgeführt wird, welches mit einem aus dem/den Oxid(en) eines oder mehrerer stark sauerstoffaffiner Metalle gebildeten Futter ausgekleidet ist, wobei in einem ersten Schritt eine Teillegierung aus den ausgewählten Elementen ohne Titan bzw. Zirkon und, sofern Cer als Legierungselement vorgesehen ist, ohne Cer hergestellt wird, wobei die Teillegierung in einem zweiten Schritt mit Titan und/oder Zirkon und/oder Aluminium in einer Menge, die der mit den Legierungselementen eingebrachten Sauerstoffmenge entspricht, desoxidiert wird, wobei ferner nach einer Haltezeit, in der sich die bei der Desoxidation entstanden Oxidpartikel in der Schlacke weitestgehend absetzen, in einem dritten Schritt die restliche Menge an Titan und/oder Zirkon in die Schmelze gegeben wird und wobei die ggf. vorgesehene Zugabe an Cer erst nach der Desoxidation erfolgt und die Schmelze danach schroff abgekühlt wird.

2.  Verfahren nach Anspruch 1,
    **dadurch gekennzeichnet,**
    daß Cer als letzter Legierungsbestandteil in die Schmelze gegeben wird.

3.  Verfahren nach Anspruch 1,
    **dadurch gekennzeichnet,**
    daß die Desoxidation der Schmelze in mehreren Teilschritten vorgenommen wird, wobei im ersten Teilschritt mehr als die Hälfte der vorgesehenen Desoxidationsmittelmenge zugegeben wird.

4.  Verfahren nach einem der Ansprüche 1 bis 3,
    **dadurch gekennzeichnet,**
    daß die in Minuten gemessene Haltezeit nach der Zugabe des Desoxidationsmittels mindestens dem in cm gemessenen Zahlenwert der Badspiegelhöhe der Schmelze entspricht.

5.  Verfahren nach einem der Ansprüche 1 - 4,
    **dadurch gekennzeichnet,**
    daß die Schmelze nach der Zugabe der restlichen Menge an Titan und/oder Zirkon noch über eine Zeit gehalten wird, deren Dauer in Minuten gemessen mindestens dem in cm gemessenen Zahlenwert der Badspiegelhöhe der Schmelze entspricht.

6.  Verfahren nach einem der Ansprüche 1 - 4,
    **dadurch gekennzeichnet,**
    daß die restliche Menge an Titan und/oder Zirkon in mindestens zwei Teilmengen zugegeben und die Schmelze nach jeder Zugabe einer Teilmenge jeweils für eine Dauer gehalten wird, deren in Minuten gemessener Zahlenwert mindestens der in cm gemessenen Badspiegelhöhe der Schmelze entspricht.

7.  Verfahren nach einem der Ansprüche 1 - 6,
    **dadurch gekennzeichnet,**
    daß für das Futter Calciumoxid (CaO) verwendet wird.

8.  Verfahren nach einem der Ansprüche 1 - 7,
    **dadurch gekennzeichnet,**
    daß für das Futter Ceroxid ($Ce_2O_3$) verwendet wird.

9.  Verfahren nach einem der Ansprüche 1 - 8,
    **dadurch gekennzeichnet,**
    daß für das Futter Zirkonoxid ($ZrO_2$) verwendet wird.

10. Verfahren nach einem der Ansprüche 1 - 9,
    **dadurch gekennzeichnet,**
    daß für das Futter Aluminiumoxid ($Al_2O_3$) verwendet wird.

11. Verfahren noch einem der Ansprüche 1 - 10,
    **dadurch gekennzeichnet,**
    daß die Abkühlung in einer flüssigkeitsgekühlten Metallkokille erfolgt.

12. Verfahren nach Anspruch 11,
    **dadurch gekennzeichnet,**
    daß die Abkühlung in einer wassergekühlten Stahl- oder Kupferkokille erfolgt.

13. Verfahren nach einem der Ansprüche 1 - 12,
    **dadurch gekennzeichnet,**
    daß zur Abkühlung eine Kokille verwendet wird, deren in $cm^2$ gemessene Innenoberfläche mindestens dem 40-Fachen des in Kg gemessenen Schmelzengewichtes entspricht.

**14.** Verfahren nach Anspruch 13,
**dadurch gekennzeichnet,**
daß die Innenoberfläche mindestens dem 60-Fachen des Schmelzengewichtes entspricht.

**Claims**

**1.** A method for preparing an alloy for hydrogen storage on the bases of the Laves phases $AB_2$, A being titanium and/or zirconium and B being one or more elements of the rest of the series of transition metals, and the ratio of atomic radii $r_A/r_B$ being between 1.05 and 1.68, by smelting in vacuum or under protective gas, with the smelting, which preferably takes place in one heat, being performed in a vessel which is lined with a lining formed of the oxide(s) of one or more metals having a strong affinity to oxygen, with a partial alloy of the selected elements being produced in a first step without titanium or zirconium and, if cerium is provided as an alloy element, without cerium, with the partial alloy in a second step being deoxidised with titanium and/or zirconium and/or aluminium in a quantity which corresponds to the quantity of oxygen introduced with the alloy elements, wherein further after a holding time in which the oxide particles produced upon deoxidation are deposited to a very large extent in the slag, in a third step the remaining quantity of titanium and/or zirconium is added to the melt and wherein the addition of cerium for which provision is optionally made does not take place until after the deoxidation and the melt is then cooled abruptly.

**2.** A method according to Claim 1,
characterised in that
cerium is added to the melt as the last alloy constituent.

**3.** A method according to Claim 1,
characterised in that
the deoxidation of the melt is performed in a plurality of partial steps, with more than half of the intended quantity of deoxidation agent being added in the first partial step.

**4.** A method according to one of Claims 1 to 3,
characterised in that
the holding time, measured in minutes, after the addition of the deoxidation agent at least corresponds to the numerical value, measured in cm, of the height of the bath level of the melt.

**5.** A method according to one of Claims 1 to 4,
characterised in that
the melt after the addition of the remaining quantity of titanium and/or zirconium is held over a period, the length of which, measured in minutes, at least corresponds to the numerical value, measured in cm, of the height of the bath level of the melt.

**6.** A method according to one of Claims 1 - 4,
characterised in that
the remaining quantity of titanium and/or zirconium is added in at least two partial quantities and the melt, after each addition of a partial quantity, is held each time for a period, the numerical value of which, measured in minutes, at least corresponds to the height of the bath level of the melt, measured in cm.

**7.** A method according to one of Claims 1 - 6,
characterised in that
calcium oxide (CaO) is used for the lining.

**8.** A method according to one of Claims 1 - 7,
characterised in that
cerium oxide ($Ce_2O_3$) is used for the lining.

**9.** A method according to one of Claims 1 - 8,
characterised in that
zirconium oxide ($ZrO_2$) is used for the lining.

6

EP 0 204 055 B1

**10.** A method according to one of Claims 1 - 9,
characterised in that
aluminium oxide ($Al_2O_3$) is used for the lining.

**11.** A method according to one of Claims 1 - 10,
characterised in that
the cooling takes place in a liquid-cooled metal mould.

**12.** A method according to Claim 11,
characterised in that
the cooling takes place in a water-cooled steel or copper mould.

**13.** A method according to one of Claims 1 - 12,
characterised in that
a mould which has an inner surface area, measured in $cm^2$, which corresponds to at least 40 times the weight of the melt, measured in kg, is used for cooling.

**14.** A method according to Claim 13,
characterised in that
the inner surface area corresponds to at least 60 times the weight of the melt.

**Revendications**

**1.** Procédé pour fabriquer un alliage pour le stockage d'hydrogène sur la base des phases de Laves $AB_2$, où A signifie le titane et/ou le zirconium et B un ou plusieurs éléments de la série des métaux de transition restants et le rapport des rayons atomiques $r_A/r_B$ est entre 1 ,05 et 1 ,68, par élaboration ou fusion sous vide ou dans un gaz inerte, l'élaboration, qui se fait de préférence en une seule chaude, étant effectuée dans un récipient qui est enrobé d'un revêtement formé à partir du ou des oxydes d'un ou plusieurs métaux ayant une forte affinité vis-à-vis de l'oxygène, un alliage partiel étant réalisé, dans une première étape, à partir des éléments choisis sans le titane ou le zirconium, et, dans la mesure où le cérium est prévu en tant qu'élément de l'alliage, sans cérium, l'alliage partiel étant désoxydé, dans une deuxième étape, avec du titane et/ou du zirconium et/ou de l'aluminium en une quantité qui correspond à la quantité d'oxygène introduite avec les éléments de l'alliage, la quantité restante de titane et/ou de zirconium étant amenée de plus dans la masse fondue, dans une troisième étape, après un temps d'arrêt pendant lequel les particules d'oxyde, formées lors de la désoxydation, se déposent, dans une très large mesure, dans les scories, et l'addition prévue le cas échéant de cérium n'ayant lieu qu'après la désoxydation et la masse fondue étant ensuite brusquement refroidie.

**2.** Procédé selon la revendication 1,
caractérisé en ce que le cérium est amené dans la masse fondue en tant que dernier constituant de l'alliage.

**3.** Procédé selon la revendication 1,
caractérisé en ce que la désoxydation de la masse fondue est effectuée en plusieurs étapes partielles, plus de la moitié de la quantité prévue d'agent désoxydant étant ajoutée dans la première étape partielle.

**4.** Procédé selon l'une des revendications 1 à 3,
caractérisé en ce que le temps d'arrêt, mesuré en minutes, après l'addition de l'agent désoxydant correspond au moins à la valeur, mesurée en cm, de la hauteur du bain de masse fondue.

**5.** Procédé selon l'une des revendications 1 à 4,
caractérisé en ce que la masse fondue, après l'addition de la quantité restante de titane et/ou de zirconium, est encore maintenue pendant un temps dont la durée, mesurée en minutes, correspond au moins à la valeur, mesurée en cm, de la hauteur du bain de masse fondue.

**6.** Procédé selon l'une des revendications 1 à 4,
caractérisé en ce que la quantité restante de titane et/ou de zirconium est ajoutée en au moins deux

7

quantités partielles, et la masse fondue, après chaque addition d'une quantité partielle, est maintenue pendant une durée qui, mesurée en minutes, correspond au moins à la hauteur, mesurée en cm, du bain de masse fondue.

7. Procédé selon l'une des revendications 1 à 6,
caractérisé en ce que, pour le revêtement, on utilise de l'oxyde de calcium (CaO).

8. Procédé selon l'une des revendications 1 à 7,
caractérisé en ce que, pour le revêtement, on utilise de l'oxyde de cérium ($Ce_2O_3$).

9. Procédé selon l'une des revendications 1 à 8,
caractérisé en ce que, pour le revêtement, on utilise de l'oxyde de zirconium ($ZrO_2$).

10. Procédé selon l'une des revendications 1 à 9,
caractérisé en ce que, pour le revêtement, on utilise de l'oxyde d'aluminium ($Al_2O_3$).

11. Procédé selon l'une des revendications 1 à 10,
caractérisé en ce que le refroidissement a lieu dans un moule métallique refroidi par un liquide.

12. Procédé selon la revendication 11,
caractérisé en ce que le refroidissement a lieu dans un moule de cuivre ou d'acier refroidi par de l'eau.

13. Procédé selon l'une des revendications 1 à 12,
caractérisé en ce que, pour le refroidissement, on utilise un moule dont la surface interne mesurée en $cm^2$ correspond à au moins 40 fois le poids de la masse fondue mesuré en kg.

14. Procédé selon la revendication 13,
caractérisé en ce que la surface interne correspond à au moins 60 fois le poids de la masse fondue.